# EUROPÄISCHE PATENTANMELDUNG

(11) **EP 2 829 379 A1**
(43) Veröffentlichungstag der Anmeldung: **28.01.2015**
(21) Anmeldenummer: 13405083.0
(22) Anmeldetag: 22.07.2013
(51) Int. Cl.: B29C 49/42, B29C 49/58, B29C 49/78

(54) **Ventilanordnung**

(71) Anmelder: Eugen Seitz AG, 8623 Wetzikon (CH)
(72) Erfinder: Schmidt, Joachim, 8442 Hettlingen (CH); Elbs, Christian, 9651 Ennetbühl (CH); Schnetzer, Roland, 8620 Wetzikon (CH)
(74) Vertreter: EGLI-EUROPEAN PATENT ATTORNEYS

(57) **Zusammenfassung**

Die Erfindung betrifft eine Ventilanordnung (100), welche ein Hauptventil (1) mit einem in einem Ventilgehäuse (3) geführten Schaltkolben (2) aufweist, der relativ zu dem Ventilgehäuse (3) zwischen einer ersten Position, in welcher das Hauptventil (1) geschlossen ist, und einer zweiten Position, in welcher das Hauptventil (1) geöffnet ist, verschiebbar ist. Der Schaltkolben (2) weist eine Steuerfläche (9) auf, die einem Steuerraum (10) des Ventilgehäuses (3) zugewandt und zur Übertragung einer Steuerkraft auf den Schaltkolben (2) ausgebildet ist. Erfindungsgemäss ist mindestens eine einen Steuerluftschaltraum (20) mit dem Steuerraum (10) strömungsmässig verbindende Bohrung (21; 27, 28) vorgesehen, über die zum Schliessen des Hauptventils (1) Steuerluft in den Steuerraum (10) einleitbar ist, und über die beim Öffnen des Hauptventils (1) der Steuerraum (10) entlüftbar ist, wobei über eine in den Steuerluftschaltraum (20) mündende Steuerluftbohrung (23) dem Steuerluftschaltraum (20) Steuerluft zuführbar ist, und wobei eine in den Steuerluftschaltraum (20) mündende Entlüftungsbohrung (24) vorgesehen ist, über die der Steuerraum (10) beim Öffnen des Hauptventils (1) entlüftbar ist.

## Beschreibung

Die vorliegende Erfindung betrifft eine Ventilanordnung nach dem Oberbegriff des unabhängigen Patentanspruches 1.

Demgemäss betrifft die Erfindung insbesondere eine Ventilanordnung, die ein Hauptventil mit einem in einem Ventilgehäuse geführten Schaltkolben aufweist, der relativ zu dem Ventilgehäuse zwischen einer ersten Position, in welcher das Hauptventil geschlossen ist, und einer zweiten Position, in welcher das Hauptventil geöffnet ist, verschiebbar ist. Der Schaltkolben weist eine Steuerfläche auf, die einem Steuerraum des Ventilgehäuses zugewandt ist, und die zur Übertragung einer Steuerkraft auf den Steuerkolben ausgebildet ist.

Die erfindungsgemässe Ventilanordnung eignet sich insbesondere zum pneumatischen Schalten einer Blasluftzufuhr bei einem Blasformprozess. So ist es beispielsweise denkbar, dass die erfindungsgemässe Ventilanordnung als Teil eines Steuerblockes zur Steuerung eines Blasdruckes einer Streckblasmaschine zum Einsatz kommt. Selbstverständlich sind aber auch andere Anwendungen der erfindungsgemässen Ventilanordnung denkbar.

Eine Ventilanordnung der eingangs genannten Art wird insbesondere bei der Herstellung von blasgeformten Behältern eingesetzt, um eine mit der Durchführung des Blasvorgangs koordinierte Zuleitung eines oder mehrerer Blasdrücke durchführen zu können.

Für die Herstellung von Kunststoff-Behältern, insbesondere von PET-Flaschen, wird ein Rohling oder Vorformling aus einem thermoplastischen Material, beispielsweise PET (Polyethylenterephthalat) innerhalb einer Blasmaschine unterschiedlichen Bearbeitungsstationen zugeführt.

Üblicherweise weist eine derartige Blasmaschine mehrere Blasstationen auf, die auf einem gemeinsamen Blasrad angeordnet sind, und die jeweils eine Blasvorrichtung sowie Formwerkzeug aufweisen, in dem der zuvor temperierte Vorformling durch biachsiale Orientierung zu einem Behälter expandiert wird. Eine Heizstation zum Vorwärmen der Vorformlinge ist dabei üblicherweise nicht auf dem Blasrad selbst, sondern in einem vorhergehenden Durchlaufofen vorgesehen.

Die Expansion der Vorformlinge erfolgt üblicherweise mit Hilfe von Druckluft (Blasluft), die in den zu expandierenden Vorformling eingeleitet wird, während gleichzeitig eine Reckstange zum Führen des Vorformlings ausgefahren wird.

Im Hinblick auf die verwendeten Blasstationen sind unterschiedliche Ausführungsformen bekannt. Bei Blasstationen, die auf rotierenden Transporträdern angeordnet sind, ist häufig eine buchartige Aufklappbarkeit der Formträger anzutreffen. Es ist aber auch möglich, relativ zueinander verschiebbare oder andersartig geführte Formträger einzusetzen. Bei ortsfesten Blasstationen, die insbesondere dafür geeignet sind, mehrere Kavitäten zur Behälterformung aufzunehmen, werden üblicherweise parallel zueinander angeordnete Platten als Formträger verwendet.

Üblicherweise wird der temperierte Vorformling in mehreren Schritten in seine endgültige Form aufgeblasen. Hierfür weist der Vorformling im Wesentlichen den fertigen Flaschen-oder Behälterkopf auf, welcher in der Blasform der Blasformmaschine gehalten und mit einem Druckluftsystem verbunden wird. Durch Einblasen von Druckluft (Blasluft) durch den Flaschen- bzw. Behälterkopf wird der Vorformling aufgeblasen und schliesslich in seine endgültige Form gebracht.

Der eigentliche Blasprozess wird damit in einem mehrstufigen, insbesondere zweistufigen, Verfahren ausgeführt, wobei zuerst ein Vorblasen mit einem Druckwert zwischen 2 bis 20 bar über ein Vorblasventil erfolgt, und danach das Fertigblasen, d.h. das endgültige Formen des Kunststoffbehälters zu ihrer Endform, mit einem Druckwert zwischen 15 bis 40 bar über ein Hauptblasventil erfolgt. Diese beiden Ventile sind jeweils mit einer Druckluftversorgung mit dem entsprechenden Druckniveau verbunden.

Insbesondere bei der Herstellung von blasgeformten Behältern spielt der Zeitfaktor eine wesentliche Rolle. Im Einzelnen ist es speziell für diese Anwendungen unumgänglich, dass die pneumatischen Ventile, welche die Zufuhr der Blasluft schalten, schnell öffnen und auch schnell wieder schliessen können.

Demnach liegt der vorliegenden Erfindung die Aufgabe zugrunde, eine Ventilanordnung der eingangs genannten Art dahingehend weiterzubilden, dass mit möglichst geringem Aufwand kurze Schaltzeiten realisierbar sind, insbesondere solche Schaltzeiten, die zur Blasluftzuführung bei Blasformmaschinen gewünscht sind.

Diese Aufgabe wird durch den Gegenstand des unabhängigen Patentanspruches 1 gelöst. Vorteilhafte Weiterbildungen der erfindungsgemässen Ventilanordnung sind in den abhängigen Ansprüchen angegeben.

Demgemäss wird eine Ventilanordnung vorgeschlagen, welche ein Hauptventil mit einem in einem Ventilgehäuse geführten Schaltkolben aufweist, der relativ zu dem Ventilgehäuse zwischen einer ersten Position und einer zweiten Position verschiebbar ist. In der ersten Position des Schaltkolbens ist das Hauptventil geschlossen, während in der zweiten Position das Hauptventil geöffnet ist.

Der Schaltkolben weist eine Steuerfläche auf, die einem Steuerraum des Ventilgehäuses zugewandt und zur Übertragung einer Steuerkraft auf den Schaltkolben ausgebildet ist.

Erfindungsgemäss ist vorgesehen, dass die Ventilanordnung einen Steuerluftschaltraum aufweist, welcher über mindestens eine Bohrung strömungsmässig mit dem Steuerraum des Hauptventils verbunden ist. Über die mindestens eine Bohrung, welche den Steuerluftschaltraum mit dem Steuerraum strömungsmässig verbindet, ist die Steuerluft für das Hauptventil in den Steuerraum des Hauptventiles einleitbar, um das Hauptventil zu schliessen, d.h. in seine erste Position zu überführen. Über die mindestens eine Bohrung, welche den Steuerluftschaltraum mit dem Steuerraum strömungsmässig verbindet, ist ferner der Steuerraum beim Öffnen des Hauptventils entlüftbar.

In den Steuerluftschaltraum mündet eine Steuerluftbohrung, über welche dem Steuerluftschaltraum Steuerluft zuführbar ist. Andererseits mündet in den Steuerluftschaltraum ferner eine Entlüftungsbohrung, über die der Steuerraum beim Öffnen des Hauptventils entlüftbar ist.

In dem Steuerluftschaltraum ist ein Schliesselement längsverschieblich derart aufgenommen, dass das Schliesselement relativ zu dem Steuerluftschaltraum zwischen einer ersten Position, in welcher die in den Steuerluftschaltraum mündende Steuerluftbohrung von dem Schliesselement verschlossen wird, und einer zweiten Position verschiebbar ist, in welcher die in den Steuerluftschaltraum mündende Entlüftungsbohrung von dem Schliesselement verschlossen wird.

Gemäss einem Aspekt der vorliegenden Erfindung ist mindestens eine erste und mindestens eine zweite Bohrung vorgesehen, welche jeweils den Steuerluftschaltraum mit dem Steuerraum strömungsmässig verbinden, wobei die mindestens eine erste und die mindestens eine zweite Bohrung derart angeordnet sind, dass in der ersten Position des Schliesselements die mindestens eine erste Bohrung von dem Schliesselement verschlossen wird und die mindestens eine zweite Bohrung derart freilegt, dass die Entlüftungsbohrung strömungsmässig über die mindestens eine zweite Bohrung mit dem Steuerraum verbunden ist. In der zweiten Position des Schliesselements hingegen liegt die mindestens eine erste Bohrung derart frei, dass die Steuerluftbohrung strömungsmässig über die mindestens eine erste Bohrung mit dem Steuerraum verbunden ist. In der mindestens einen ersten Bohrung ist eine Rückschlagarmatur, insbesondere ein Rückschlagventil, angeordnet. Hierbei handelt es sich um ein Bauteil, welches eine Gasströmung nur von dem Steuerluftschaltraum zu dem Steuerraum (und nicht umgekehrt) zulässt.

Gemäss einer bevorzugten Realisierung der vorliegenden Erfindung ist ferner ein Pilotventil vorgesehen, um eine Steuerluftzufuhr zu dem Steuerraum des Hauptventils zu schalten, wobei das Pilotventil strömungsmässig mit der Steuerluftbohrung verbunden ist, und wobei die Nennweite der mindestens einen ersten Bohrung mindestens gleich gross wie die Nennweite des Pilotventils ist.

Besonders bevorzugt in diesem Zusammenhang ist, dass bei einer Nennweite des Pilotventils von 0,4 bis 2,0 mm, und vorzugsweise von 0,8 bis 1,6 mm, die mindestens eine zweite Bohrung eine Nennweite von mindestens 2,0 mm, und insbesondere mindestens 2,5 mm aufweist.

Gemäss einem weiteren Aspekt der vorliegenden Erfindung ist die mindestens eine Bohrung derart angeordnet, dass diese weder in der ersten Position noch in der zweiten Position des Schliesselements von dem Schliesselement überdeckt und verschlossen wird. Vielmehr ist bei dieser Ausführungsform der erfindungsgemässen Lösung das Schliesselement sowohl in seiner ersten als auch in seiner zweiten Position zwischen der Steuerluftbohrung und der mindestens einen Bohrung angeordnet. Bei dieser Ausführungsform sollte das Schliesselement derart ausgelegt sein, dass in der zweiten Position des Schliesselements das Schliesselement für durch die Steuerluftbohrung in den Steuerluftschaltraum eingeleitete Steuerluft passierbar ist.

Um eine Passage von Steuerluft durch das Schliesselement zu ermöglichen, kommen verschiedene Ausführungsformen in Frage. Beispielsweise ist es denkbar, dass das Schliesselement eine Hutmembran aufweist. Alternativ oder zusätzlich ist es denkbar, in dem Schliesselement Durchgangslöcher bzw. Durchgangsbohrungen vorzusehen, die sich in Längsrichtung des Schliesselements erstrecken und insbesondere im peripheren Umfangsbereich des Schliesselements angeordnet sind. Selbstverständlich kommen aber auch andere Ausführungsformen in Frage.

Um die Schaltzeiten der Ventilanordnungen weiter zu reduzieren, ist es von Vorteil, wenn der Steuerluftschaltraum möglichst nahe an dem Steuerraum des Hauptventils angeordnet ist, um die Leitungswege zwischen dem Steuerluftschaltraum und dem Steuerraum zu reduzieren. Zu diesem Zweck ist es von Vorteil wenn der Steuerluftschaltraum in dem Ventilgehäuse ausgebildet ist.

Eine weitere Erhöhung der Schaltzeiten kann erreicht werden, wenn der Schaltkolben möglichst leichtgewichtig ausgeführt ist, beispielsweise aus Kunststoff, insbesondere PETP gebildet ist.

Nachfolgend werden unter Bezugnahme auf die beiliegenden Zeichnungen exemplarische Ausführungsformen der vorliegenden Erfindung beschrieben.

Es zeigen:
- Fig. 1a:: einen schematischen Vertikalschnitt durch eine Ventilanordnung gemäss einer ersten exemplarischen Ausführungsform, wobei das Hauptventil der Ventilanordnung in seinem geschlossenem Zustand vorliegt;
- Fig. 1b:: eine schematische Vertikalschnittansicht durch die Ventilanordnung gemäss Fig. 1a, wobei das Hauptventil der Ventilanordnung in seinem geöffneten Zustand vorliegt.
- Fig. 2a:: einen schematischen Vertikalschnitt durch eine Ventilanordnung gemäss einer zweiten exemplarischen Ausführungsform, wobei das Hauptventil der Ventilanordnung in seinem geschlossenem Zustand vorliegt; und
- Fig. 2b:: eine schematische Vertikalschnittansicht durch die Ventilanordnung gemäss Fig. 2a, wobei das Hauptventil der Ventilanordnung in seinem geöffneten Zustand vorliegt.

Kunststoffbehälter, insbesondere Kunststoffflaschen wie beispielsweise PET-Flaschen, können mit einem Streckblasprozess hergestellt werden. Dabei wird ein aufgewärmter (temperierter) Vorformling mechanisch in Längsrichtungs gestreckt und in mehreren Stufen zum fertigen Produkt (Behälter) geblasen. Jede dieser beim Blasformvorgang vorgesehenen Stufe entspricht einem bestimmten Blasdruck. Der für die jeweilige Stufe benötigte Blasdruck wird durch das Öffnen eines entsprechenden Blasdruckventils zu dem zu entstehenden Behälter geleitet.

Aufgrund der kurzen Blaszeiten ist es unumgänglich, dass die Schaltsignale, insbesondere elektrischen Schaltsignale, für die Blasluftventile schnell und genau im mechanischen Teil der Blasventile umgesetzt werden. Zu diesem Zweck kommen häufig vorgesteuerte Ventilausführungen zum Einsatz, die sich aus einem Pilotventil und einem Hauptventil zusammensetzen. Die Nennweite des Pilotventils bestimmt dabei massgebend die Schaltzeit der gesamten Ventilanordnung. Die typische Nennweite der üblicherweise verwendeten Pilotventile beträgt in etwa 1,0 mm. Diese Nennweite ist nicht ausreichend für den gewünschten schnellen Umschaltvorgang, welcher insbesondere bei einem Streckblassprozess erforderlich ist.

Um handelsübliche Pilotventile mit einer Nennweite von etwa 1,0 mm auch bei Blasventilen einsetzen zu können, ist es denkbar, die relativ preisgünstigen Pilotventile mit einer sogenannten Boosterstufe zu versehen, um die gewünschten grossen Nennweiten von etwa 2,5 mm zur Ansteuerung des Hauptventils und die entsprechend kurzen Schaltzeiten realisieren zu können.

Mit der vorliegenden Erfindung, die nachfolgend unter Bezugnahme auf die in den Zeichnungen dargestellten exemplarischen Ausführungsformen näher beschrieben wird, kann auch ohne das Vorsehen einer relativ aufwendigen Boosterstufe mit einem vorgesteuerten Ventil, bei welchem ein preisgünstiges Pilotventil mit einer Nennweite von beispielsweise etwa 1,0 mm zum Einsatz kommt, die für die Anwendung in einer Blasformmaschine gewünschten schnellen Schaltzeiten realisiert werden.

Dabei liegt der Erfindung insbesondere die Erkenntnis zu Grunde, dass es zur Verkürzung der Schaltzeiten von Blasventilen insbesondere darauf ankommt, für das Einschalten des Blasdruckes, d.h. für das Überführen des Hauptventils in seinen geöffneten Zustand, relativ grosse Nennweiten vorzusehen, während für das Ausschalten des Blasdruckes, d.h. für das Überführen des Hauptventils in seinen geschlossenen Zustand, bereits die relativ kleinen Nennweiten der üblicherweise eingesetzten preisgünstigen Pilotventile von etwa 1,0 mm ohne Boosterstufe ausreichen.

Um diese Kenntnis in die Realität umzusetzen, sind unterschiedliche Ansätze denkbar.

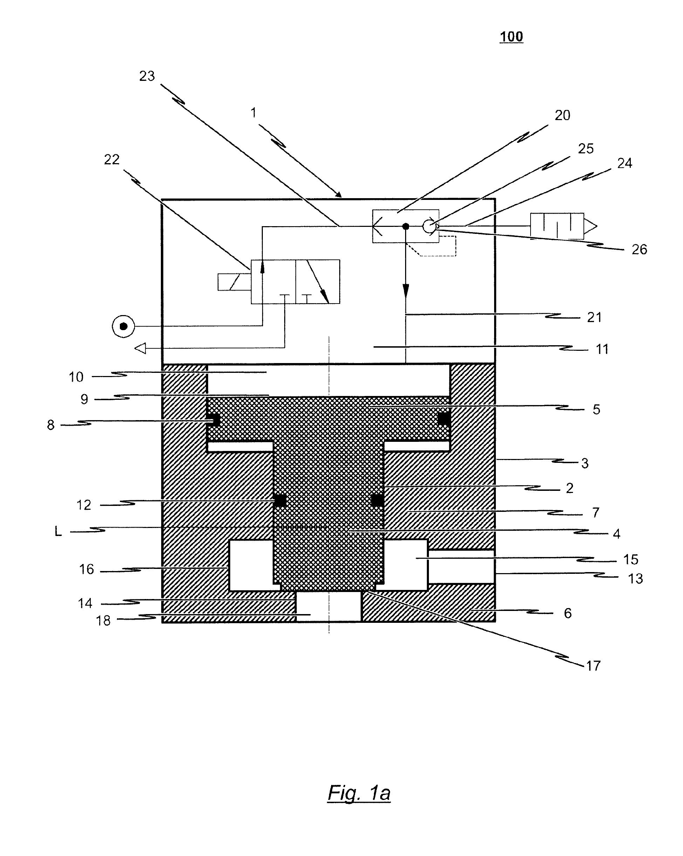

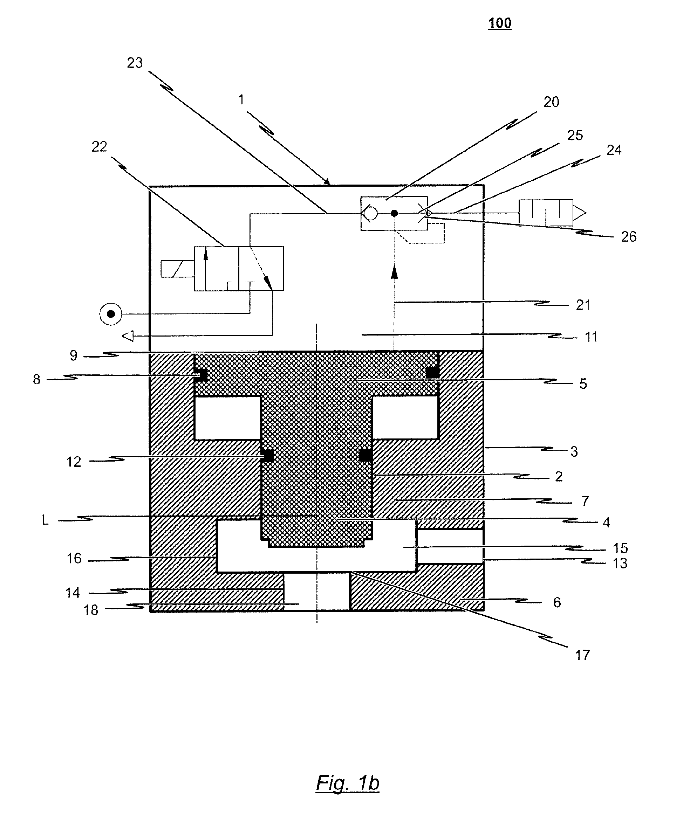

Ein erster Ansatz wird nachfolgend unter Bezugnahme auf die Darstellungen in den Figuren 1a und 1b näher beschrieben. Hierbei zeigt Fig. 1a eine schematische Vertikalansicht durch eine erste exemplarische Ausführungsform der erfindungsgemässen Ventilanordnung 100, bei welcher sich das Hauptventil 1 im geschlossenen Zustand befindet. In Fig. 1b ist ebenfalls in einer schematischen Vertikalansicht die Ventilanordnung 100 gemäss der ersten exemplarischen Ausführungsform mit dem Hauptventil 1 in seinem offenen Zustand gezeigt.

Die Ventilanordnung 100 besteht im Wesentlichen aus einem Hauptventil 1 und einem Pilotventil 22. Das Pilotventil dient dazu, den zum Betätigen des Hauptventils 1 notwendigen Steuerdruck zu schalten.

Das Hauptventil 1 weist einen Schaltkolben 2 auf, der in einem Ventilgehäuse 3 aufgenommen ist. Der Schaltkolben 2 ist im Wesentlichen aus einem Kolbenschaft 4 und einem Kolbenkopf 5 ausgebildet. Bei den in den Zeichnungen dargestellten exemplarischen Ausführungsformen erstrecken sich der Kolbenschaft 4 und der Kolbenkopf im Wesentlichen symmetrisch entlang einer Kolbenlängsachse L und bilden gemeinsam eine im Vertikalschnitt T-förmige Grundstruktur des Schaltkolbens 2 aus.

Der Kolbenschaft 4 erstreckt sich durch eine mit einem Ventilsockel 6 verbundene Kolbenhülse 7 hindurch und ist relativ zu der Kolbenhülse 7 mit einer Dichtung 8 abgedichtet. Die Dichtung 8 kann beispielsweise als O-Ring ausgebildet sein.

Der Kolbenkopf 5 weist eine Steuerfläche 9 auf, die zur Positionierung des Schaltkolbens 2 innerhalb des Ventilgehäuses 3 von einem Steuerdruck beaufschlagbar ist. Angrenzend zur Steuerfläche 9 des Schaltkolbens 2 ist ein Steuerraum 10 ausgebildet, welcher bereichsweise von einem Ventilgehäusekopf 11 begrenzt wird. Der Ventilgehäusekopf 11 ist Teil des Ventilgehäuses 3 und mit dem Ventilsockel 6 verbunden. Der Kolbenkopf ist gegenüber einer Innenwandung des Ventilgehäusekopfes 11 mit einer Dichtung 12 abgedichtet. Zur Gewährleistung einer Anschlagdämpfung bei einer Positionierung des Schaltkolbens 2 kann in den Kolbenkopf 5 ein Dämpfungselement (nicht eingezeichnet) eingesetzt sein.

In dem Ventilsockel 6 sind ein Blasluft-Eingangskanal 14 sowie ein Blasluft-Ausgangskanal 13 ausgebildet, wobei diese beiden Kanäle in einem Ventilgehäuseinnenraum 15 durch die Innenwandung 16 des Ventilsockels 6 begrenzt ist. Im Bereich einer dem Ventilgehäuseinnenraum 15 zugewandten Ausdehnung stellt der Blasluft-Zufuhrkanal 14 einen Hauptströmungsweg für den zu schaltenden Blasdruck bereit.

Fig. 1a zeigt das Hauptventil 1 der Ventilanordnung 100 gemäss einer exemplarischen Ausführungsform in seinem geschlossenen Zustand, d.h. in einem Zustand, in welchem der Hauptströmungsweg verschlossen ist. Hierbei wird der Schaltkolben 2 gegen einen Ventilsitz 17 bzw. die Umrandung des Hauptströmungsweges gedrückt und dichtet den Ventilgehäuseinnenraum 15 gegenüber dem Hauptströmungsweg ab.

In dem Steuerraum 10, welcher im' oberen Teil des Ventilgehäuses 3 ausgebildet ist, ist ein Steuerdruck anlegbar, der dann die Steuerfläche 9 des Kolbenkopfes 5 beaufschlagt und eine auf den Schaltkolben 2 einwirkende Kraft erzeugt, die grösser als die von dem Hauptdruck (Blasdruck) auf die dem Blasdruck ausgesetzte Fläche des Schaltkolbens 2 bzw. des Kolbenschaftes 4 einwirkende Kraft dimensioniert ist. Auf diese Weise wird ein Schliessen des Hauptventils 1 bewirkt.

Bei einer Absenkung des Steuerdruckes wird der Schaltkolben durch den einwirkenden Hochdruck in Richtung der Kolbenlängsachse L verschoben, infolgedessen der Schaltkolben 2 nicht mehr auf den Ventilsitz 17 gedrückt wird und der Hochdruck (Blasdruck) aus dem Hauptströmungsweg 18 durch den Ventilgehäuseinnenraum 15 hindurch in den Bereich des Blasluft-Ableitungskanal 13 übertreten kann. Das Hauptventil befindet sich hierdurch in einem geöffneten Zustand.

Bei einem erneuten Anheben des Steuerdruckes kehrt der Schaltkolben 2 in seine erste Position zurück, in welcher das Hauptventil 1 geschlossen ist bzw. in welcher der Schaltkolben 2 gegen den Ventilsitz 1 gedrückt wird.

Um das Hauptventil 1 in seinen geöffneten Zustand überführen zu können (vgl. Fig. 1b), ist es notwendig, eine geeignete Entlüftung des Steuerraumes 10 bereitzustellen. Zu diesem Zweck mündet in den Steuerraum 10 mindestens eine Bohrung (in der exemplarischen Ausführungsform gemäss den Darstellungen in den Figuren 1a und 1b genau eine Bohrung 21), über welche zum Schliessen des Hauptventils 1 der hierfür notwendige Steuerdruck in den Steuerraum 10 gleitet wird, und durch welchen zum Öffnen des Hauptventils 1 eine entsprechende Entlüftung des Steuerraumes 10 erfolgt.

Bei der exemplarischen Ausführungsform der erfindungsgemässen Ventilanordnung 100 gemäss den Figuren 1a und 1b dient die Bohrung 21 dazu, den Steuerraum 10 des Hauptventils 1 strömungsmässig mit einem Steuerluftschaltraum 20 zu verbinden. Der Steuerluftschaltraum 20 ist vorzugsweise in unmittelbarer Nähe zu dem Steuerraum 10 angeordnet, um die strömungsmässige Verbindung zwischen dem Steuerluftschaltraum 20 und dem Steuerraum 10 möglichst kurz zu halten, was das Totvolumen reduziert und somit die mit dem Hauptventil 1 realisierbaren Schaltzeiten optimiert. Zu diesem Zweck ist der Steuerluftschaltraum 20 vorzugsweise innerhalb des Ventilgehäusekopfes 11 ausgebildet.

In den Steuerluftschaltraum 20 mündet eine ebenfalls in dem Ventilgehäusekopf 11 ausgebildete Steuerluftbohrung 23 sowie eine Entlüftungsbohrung 24. Wie dargestellt, münden die Steuerluftbohrungen 23 und Entlüftungsbohrung 24 in den Steuerluftschaltraum 20 an zwei gegenüberliegenden Seitenflächen des Steuerluftschaltraumes 20.

Die Steuerluftbohrung 23 ist strömungsmässig mit einem Pilotventil 22 der Ventilanordnung 100 verbunden. Über dieses Pilotventil wird der zum Betätigen des Schaltkolbens 2 notwendige Steuerdruck geschaltet.

Die in den Steuerluftschaltraum 23 mündende Entlüftungsbohrung 24 ist strömungsmässig über die Bohrung 21 mit dem Steuerraum 10 verbindbar, um eine Entlüftung des Steuerraumes 10 beim Öffnen des Hauptventils 1 zu ermöglichen.

In dem Steuerluftschaltraum ist ein Schliesselement 25 angeordnet, welches entlang einer Längsachse des Schliesselements 25 relativ zu dem Steuerluftschaltraum 20 längs verschiebbar ist. Im Einzelnen ist das Schliesselement 25 zwischen einer ersten Position und einer zweiten Position verschiebbar. In der ersten Position des Schliesselements 25 wird die in den Steuerluftschaltraum 20 mündende Steuerluftbohrung 23 von dem Schliesselement 25 verschlossen (vgl. Fig. 1b). In der zweiten Position des Schliesselements 25, welche in Fig. 1a dargestellt ist, verschliesst das Schliesselement 25 hingegen die in den Steuerluftschaltraum 20 mündende Entlüftungsbohrung 24, während die Steuerluftbohrung 23 strömungsmässig mit dem Inneren des Steuerluftschaltraumes 20 verbunden ist.

Bei der in den Figuren 1a und 1b schematisch dargestellten exemplarischen Ausführungsform der erfindungsgemässen Ventilanordnung 100 ist es wesentlich, dass die Bohrung 21 derart angeordnet ist, dass diese weder in der ersten noch in der zweiten Position des Schliesselements 25 von dem Schliesselement 25 überdeckt und verschlossen wird. Zu diesem Zweck mündet die Entlüftungsbohrung 24 über einen in den Steuerluftschaltraum 20 hineinragenden Schliesselementsitz 26 in den Steuerluftschaltraum 20.

Darüber hinaus ist es bei der in den Figuren 1a und 1b dargestellten exemplarischen Ausführungsform wesentlich, dass das Schliesselement 25 sowohl in seiner ersten als auch in seiner zweiten Position zwischen der Steuerluftbohrung 23 und der Bohrung 21 angeordnet und derart ausgelegt ist, dass in der zweiten Position des Schliesselements 25 (vgl. Fig. 1a) das Schliesselement 25 für Steuerluft, die über die Steuerluftbohrung 23 in den Steuerluftschaltraum 20 geleitet ist, passierbar ist.

Insbesondere ist es in diesem Zusammenhang denkbar, dass das Schliesselement 25 eine Hutmembran aufweist, welche es ermöglicht, dass über die Steuerluftbohrung 23 in den Steuerluftschaltraum 20 eingeleitete Steuerluft zwischen der Innenwandung des Steuerluftschaltraumes 20 und dem Schliesselement 25 strömen kann. Wie es in Fig. 1a mit den Pfeilen angedeutet ist, gelangt somit die Steuerluft über die Bohrung 21 in den Steuerraum 10 des Hauptventils 1.

Die Bohrung 21 weist eine Nennweite von mindestens 2,5 mm (Durchmesser) auf, um für das Einschalten des Blasdruckes, d.h. beim Öffnen des Hauptventils 1, die notwendige grosse Nennweite bereitstellen zu können. Somit kann ohne eine aufwendige Boosterschaltung in einer einfach zu realisierenden aber dennoch effektiven Weise eine Kombination aus grosser Nennweite für das Einschalten des Blasdruckes und einer kleinen Nennweite für das Ausschalten des Blasdruckes technisch umgesetzt werden.

Im Einzelnen ist in Fig. 1a ein Zustand gezeigt, in welchem das Pilotventil eingeschaltet ist und das Schliesselement 25 gegen den Schliesselementsitz 26 gedrückt wird. In Fig. 1b hingegen ist das Pilotventil ausgeschaltet, wobei das Schliesselement 25 durch den im Steuerraum 10 herrschenden Druck gegen die Steuerluftbohrung 23 gedrückt wird. Wie es mit den Pfeilen in Fig. 1b angedeutet ist, kann über die relativ grosse Bohrung 21 dann eine Schnellentlüftung des Steuerraumes 10 realisiert werden.

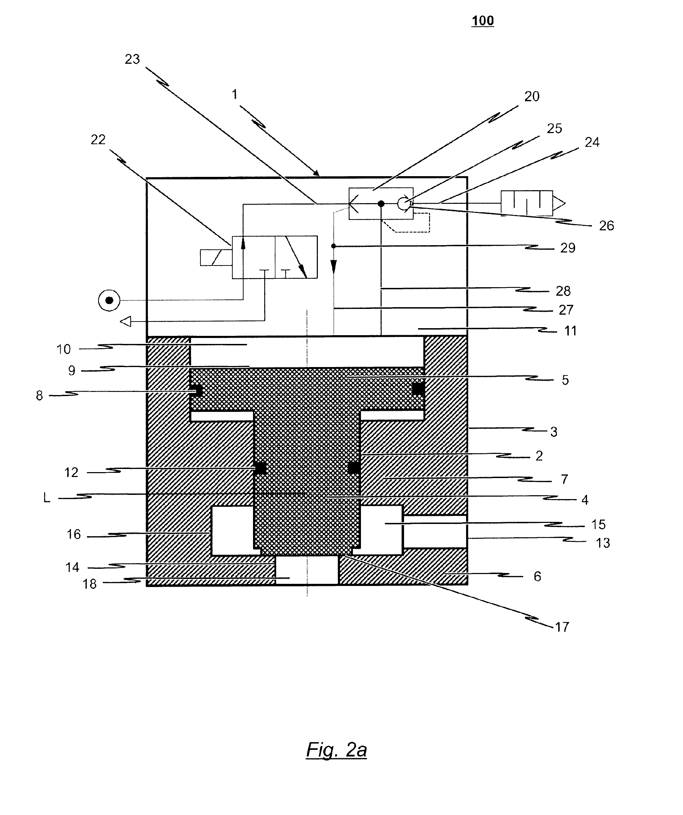

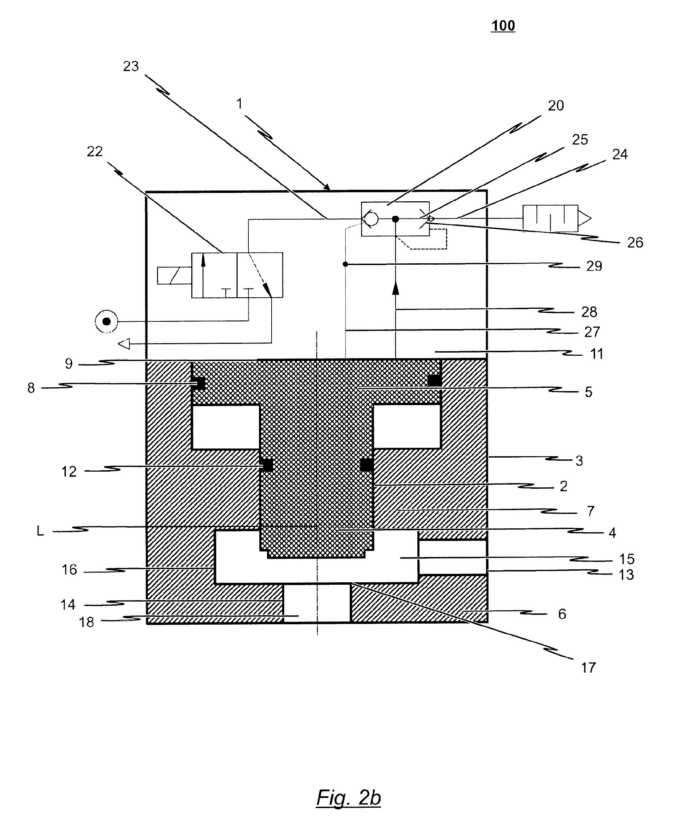

Eine weitere exemplarische Ausführungsform der erfindungsgemässen Ventilanordnung 100 ist in den Figuren 2a und 2b dargestellt, wobei Fig. 2a eine schematische Vertikalschnittansicht der Ventilanordnung 100 zeigt, bei welcher das Hauptventil 1 in seinem geschlossenen Zustand vorliegt. In Fig. 2b hingegen liegt das Hauptventil 1 in seinem geöffneten Zustand vor.

Die in den Figuren 2a und 2b dargestellte weitere Ausführungsform der erfindungsgemässen Lösung unterscheidet sich von der zuvor beschriebenen Ausführungsform wie folgt:

Anstelle der (einzigen) Bohrung 21, die den Steuerluftschaltraum 20 mit dem Steuerraum 10 strömungsmässig verbindet, kommt bei der in den Figuren 2a und 2b dargestellten Ausführungsform eine erste Bohrung 27 sowie eine zweite Bohrung 28 zum Einsatz. Beide Bohrungen 27, 28 verbinden den Steuerluftschaltraum 20 strömungsmässig mit dem Steuerraum 10. Hierbei dient die erste Bohrung 27 zum Zuführen der von der Steuerluftbohrung 23 bereitgestellten Steuerluft in den Steuerraum 10 (vgl. Fig. 2a). Die zweite Bohrung 28 hingegen dient als Schnellentlüftungsbohrung, wie es der Darstellung in Fig. 2b entnommen werden kann.

Im Einzelnen wird, sobald über das Pilotventil Steuerluft zugeführt wird, das Schliesselement 25 gegen den Schliesselementsitz 26 gedrückt und infolgedessen die Entlüftungsbohrung 24 von dem Schliesselement 25 verschlossen. Durch das Verschieben des Schliesselements 25 relativ zu dem Steuerluftschaltraum 20 und insbesondere relativ zu der ersten Bohrung 27 wird die erste Bohrung 27 in der zweiten Position des Schliesselements 25 (vgl. Fig. 2a) nicht von dem Schliesselement 25 überdeckt, so dass die Steuerluft direkt in den Steuerraum 10 einströmen kann.

Wenn das Pilotventil ausgeschaltet ist, fällt aufgrund des in der ersten Bohrung 27 angeordneten Rückschlagventils 29, der Druck in der Steuerluftbohrung 23 ab, so dass das Schliesselement 25 in seinen in Fig. 2b gezeigten Zustand übergeht und eine Schnellentlüftung über die zweite Bohrung 28 möglich ist.

Die Erfindung ist nicht auf die in den Zeichnungen dargestellte exemplarische Ausführungsform der erfindungsgemässen Ventilanordnung 100 beschränkt, sondern ergibt sich aus einer Zusammenschau sämtlicher hierin offenbarter Merkmale.

## Patentansprüche

1. Ventilanordnung (100), insbesondere zum pneumatischen Schalten einer Blasluftzufuhr bei einem Blasformprozess, wobei die Ventilanordnung (100) ein Hauptventil (1) mit einem in einem Ventilgehäuse (3) geführten Schaltkolben (2) aufweist, der relativ zu dem Ventilgehäuse (3) zwischen einer ersten Position, in welcher das Hauptventil (1) geschlossen ist, und einer zweiten Position, in welcher das Hauptventil (1) geöffnet ist, verschiebbar ist, wobei der Schaltkolben (2) eine Steuerfläche (9) aufweist, die einen Steuerraum (10) des Ventilgehäuses (3) zugewandt ist und die zur Übertragung einer Steuerkraft auf den Schaltkolben (2) ausgebildet ist,
**gekenzeichnet** durch
mindestens eine einen Steuerluftschaltraum (20) mit dem Steuerraum (10) strömungsmässig verbindende Bohrung (21; 27, 28), über die zum Schliessen des Hauptventils (1) Steuerluft in den Steuerraum (10) einleitbar ist, und über die beim Öffnen des Hauptventils (1) der Steuerraum (10) entlüftbar ist, wobei über eine in den Steuerluftschaltraum (20) mündende Steuerluftbohrung (23) dem Steuerluftschaltraum (20) Steuerluft zuführbar ist, und wobei eine in den Steuerluftschaltraum (20) mündende Entlüftungsbohrung (24) vorgesehen ist, über die der Steuerraum (10) beim Öffnen des Hauptventils (1) entlüftbar ist.

2. Ventilanordnung (100) nach Anspruch 1,
wobei ein in dem Steuerluftschaltraum (20) geführtes Schliesselement (25) vorgesehen ist, welches relativ zu dem Steuerluftschaltraum (20) zwischen einer ersten Position, in welcher von dem Schliesselement (25) die in den Steuerluftschaltraum (20) mündende Steuerluftbohrung (23) verschlossen wird, und einer zweiten Position, in welcher die in den Steuerluftschaltraum (20) mündende Entlüftungsbohrung (24) von dem Schliesselement (25) verschlossen wird, verschiebbar ist.

3. Ventilanordnung (100) nach Anspruch 2, wobei mindestens eine erste den Steuerluftschaltraum (20) mit dem Steuerraum (10) strömungsmässig verbindende Bohrung (27) und mindestens eine zweite den Steuerluftschaltraum (20) mit dem Steuerraum (10) strömungsmässig verbindende Bohrung (28) vorgesehen sind, wobei die mindestens eine erste und die mindestens eine zweite Bohrung (27, 28) derart angeordnet sind, dass in der ersten Position des Schliesselements (25) die mindestens eine erste Bohrung (27) von dem Schliesselement (25) verschlossen wird und die mindestens eine zweite Bohrung (28) freiliegt derart, dass die Entlüftungsbohrung (24) strömungsmässig über die mindestens eine zweite Bohrung (28) mit dem Steuerraum (10) verbunden ist, und dass in der zweiten Position des Schliesselements (25) die mindestens eine erste Bohrung (27) freiliegt derart, dass die Steuerluftbohrung (23) strömungsmässig über die mindestens eine erste Bohrung (27) mit dem Steuerraum (10) verbunden ist.

4. Ventilanordnung (100) nach Anspruch 3,
wobei ferner ein Pilotventil vorgesehen ist zum Schalten einer Steuerluftzufuhr zu dem Steuerraum (10) des Hauptventils (1), wobei das Pilotventil strömungsmässig mit der Steuerluftbohrung (23) verbunden ist, und wobei die Nennweite der mindestens einen ersten Bohrung (27) mindestens gleich gross wie die Nennweite des Pilotventils ist.

5. Ventilanordnung (100) nach Anspruch 4,
wobei die Nennweite des Pilotventils 0,4 bis 2,0 mm, und vorzugsweise 0,8 bis 1,6 mm beträgt, und wobei die Nennweite der mindestens einen zweiten Bohrung (28) mindestens 2,0 mm und insbesondere mindestens 2,5 mm beträgt.

6. Ventilanordnung (100) nach einem der Ansprüche 3 bis 5,
wobei in der mindestens einen Bohrung eine Rückschlagarmatur (29), welche eine Gasströmung nur von dem Steuerluftschaltraum (20) zu dem Steuerraum (10) zulässt.

7. Ventilanordnung (100) nach Anspruch 2,
wobei die mindestens eine Bohrung (21) derart angeordnet ist, dass diese weder in der ersten Position noch in der zweiten Position des Schliesselements (25) von dem Schliesselement (25) überdeckt und verschlossen wird, und wobei das Schliesselement (25) sowohl in seiner ersten als auch in seiner zweiten Position zwischen der Steuerluftbohrung (23) und der mindestens einen Bohrung (21) angeordnet und derart ausgelegt ist, dass in der zweiten Position des Schliesselements (25) das Schliesselement (25) für in den Steuerluftschaltraum (20) durch die Steuerluftbohrung (23) eingeleitete Steuerluft passierbar ist.

8. Ventilanordnung (100) nach Anspruch 7,
wobei das Schliesselement (25) eine Hutmembran aufweist.

9. Ventilanordnung (100) nach Anspruch 7 oder 8,
wobei das Schliesselement (25) Durchgangsbohrungen aufweist, die sich in Längsrichtung des Schliesselements (25) erstrecken und im peripheren Umfangsbereich des Schliesselements (25) angeordnet sind.

10. Ventilanordnung (100) nach einem der Ansprüche 1 bis 9,
wobei der Schaltkolben (2) einen Kolbenschaft (4) aufweist und wobei die Steuerfläche (9) des Schaltkolbens (2) grösser als die Querschnittsfläche des Kolbenschaftes (4) dimensioniert ist.

11. Ventilanordnung (100) nach einem der Ansprüche 1 bis 10, wobei der Schaltkolben (2) zumindest bereichsweise aus Kunststoff, insbesondere PETP, gebildet ist.

12. Ventilanordnung (100) nach einem der Ansprüche 1 bis 13, wobei der Steuerluftschaltraum (20) in dem Ventilgehäuse (3) ausgebildet ist.
